# EUROPÄISCHE PATENTSCHRIFT

(11) **EP 0 835 700 B1**
(45) Veröffentlichungstag und Bekanntmachung des Hinweises auf die Patenterteilung: **05.12.2001**
(21) Anmeldenummer: 97115523.9
(22) Anmeldetag: 08.09.1997
(51) Int. Cl.: B21D 39/03, F16B 17/00, B23K 11/00, B23K 26/00

(54) **Zweilagen-Verbundblech und Verfahren zur Herstellung**
Two-layers composite metal sheet and method of manufacture thereof
Tôle composite à deux couches et procédé de fabrication

(30) Priorität: 10.10.1996 DE 19641758
(43) Veröffentlichungstag der Anmeldung: 15.04.1998
(73) Patentinhaber: Volkswagen Aktiengesellschaft, 38436 Wolfsburg (DE)
(72) Erfinder: Oehlerking, Conrad, Dipl.-Ing., 38527 Meine (DE); Welsch, Frank, Dr., 38179 Braunschweig (DE)

(56) Entgegenhaltungen:
- WO-A-95/00269
- DE-A- 3 739 029
- DE-A- 19 503 166
- US-A- 5 305 517

## Beschreibung

Die Erfindung betrifft ein Zweilagen-Verbundblech nach dem Oberbegriff des Anspruchs 1, das sich insbesondere zum Einsatz im Fahrzeugbau eignet. Ferner betrifft die Erfindung ein Verfahren zur Herstellung des Zweilagen-Verbundbleches sowie ein Werkzeug zur Durchführung des Verfahrens.

Zweilagen-Verbundbleche für den Einsatz im Fahrzeugbau sind bekannt. Sie haben gegenüber Einlageblechen eine erhöhte Steifigkeit, so daß ihr Einsatz mit einer Gewichtseinsparung verbunden ist. Gegenüber dreilagigen Sandwich-Verbunden sind die Zweilagen-Verbundbleche weniger aufwendig und lassen auch eine Fertigung am Band zu.

Ein Zweilagen-Verbundblech ist aus der DE 195 03 166 A1 bekannt. Dieses aus einem Ober- und einem Untergurt bestehende Verbund-Blech ist über zum jeweils anderen Gurt gerichtete, aus der Oberflächenebene herausgeprägte Noppen zu einem festen Verbund vereinigt, wobei auch beide Gurte geprägte Noppen aufweisen können. Die Verbindung der Gurte wird durch Verschweißen der Noppenspitzen mit dem jeweils anfliegenden Gurt hergestellt. Der aus der Gurtfläche herausragende Flächenanteil kann pro Gurt weniger als 30 % betragen, wenn zugleich zwischen den mit dem Gegengurt verbundenen Noppen ein Hilfsmittel angeordnet ist, das ein Drehmoment übertragen kann, dessen Vektor in einer zur Gurtebene parallelen Ebene liegt.

Als Hilfsmittel dienen Noppenspitzen, die breit und derart ausgeformt sind, daß diese exakt am Gegengurt aufliegen und mit diesem verschweißt sind. Ein ggf. auftretendes Drehmoment wird mittels der Noppenspitzen vom oberen auf den unteren Gurt übertragen. Zwischen den verschweißten Noppen angeordnete, unverschweißte Stütznoppen können das Drehmoment mit übertragen. Die Zug-Druck-Steifigkeit der Gurte bleibt dabei durch die unter 30 % Flächenanteil ausmachenden Ausprägungen weitgehend erhalten.

Verfahrensseitig führt die Gurte-Verbindung unter Beibehaltung einer Biegefestigkeit, die vergleichbar mit der eines Drei-Lagen-Sandwiches ist, zu einer Senkung der zu schweißenden Noppenanzahl und auch der Schweißperlengröße. Optimierungen der gewünschten Eigenschaften des Zweilagen-Verbundbleches sind durch die Anordnung und die Ausbildung der Noppen gegeben. Diese werden durch einen Streckziehvorgang geprägt und mit dem jeweiligen Gegengurt mit einer Schweißmaschine verschweißt, wobei die Schweißelektroden weg- oder kraftbegrenzt die Gurte teilweise zusammendrücken und gleichzeitig eine Anlagefläche oder eine Ringschweißung bilden.

Aus der US 5305517 ist es des weiteren bekannt, zwei Bleche mittels des Durchsetzfügens punktförmig miteinander zu verbinden und so einen Doppelblechverbund zu erzeugen. Diese Fügemethode, bei der die beiden Bleche an der Fügestelle durch ein Werkzeug mechanisch formschlüssig mteinander verbunden werden, wobei das Werkzeug im wesentlichen aus einer Preßform und einem mit dieser zusammenwirkenden Stempel gebildet ist, ist als Methode zur Verbindung zweier direkt aufeinanderliegender Bleche bekannt. An der Fügestelle werden dabei die beiden Bleche im Bereich des Stempels durch dessen Druck auf die Bleche in Richtung auf die Preßform in Abhängigkeit von der Werkzeuggestaltung an zwei gegenüberliegenden Seiten vom übrigen Blechmaterial abgetrennt und im weiteren derart plastisch verformt, daß es im Bereich der unter dem einen Blech angeordneten Preßform zu einer formschlüssigen Verhakung der gemeinsam verformten Blechbereiche kommt. Durch die Gestaltung des Werkzeuges kann diese Verhakung sehr unterschiedlich ausgebildet sein. In der oben genannten Patentschrift werden entsprechende Werkzeuggestaltungen beschrieben.

Ferner sind aus der W0 95/00269 eine Vorrichtung und ein Verfahren zur Verbindung von Fahrzeugkarosserieteilen aus Leichtmetall durch Niete bekannt. Verfahrensgemäß werden im Überlappungsbereich der aufeinanderliegenden Blechteile in einem Arbeitsgang mit einem in einem entsprechenden Werkzeug angeordneten Stanzstempel ein Loch gestanzt, am oberen Lochrand des stempelseitigen Teils eine Absenkung für den Niet geprägt und der untere Lochrand dieses Blechteils in das andere Teil eingedrückt. Anschließend werden ein Niet eingeführt und die Blechteile miteinander vernietet. Es wird des weiteren eine Vorrichtung zur Durchführung des Verfahrens angegeben, die einen Stanzstempel mit einem Stanzteil und einem Prägeteil zum Prägen der Absenkung sowie einen Gegenhalt mit einer Bohrung zur Aufnahme des Stanzteils aufweist.

Es ist Aufgabe der Erfindung, ein Zweilagen-Verbundblech nach dem Oberbegriff des Anspruchs 1 zu schaffen, dessen Gewicht bei vergleichbarer Gurtdicke und vergleichbaren Blecheigenschaften reduziert ist.

Diese Aufgabe durch ein Zweilagen-Verbundblech mit den Merkmalen des Anspruchs 1 gelöst. Dadurch, daß in den Verbund Aussparungen eingebettet sind, ist dessen Gewicht um das Gewicht der ausgesparten Blechbereiche vermindert. Die Aussparungen sind dabei neben den Fügestellen angeordnet. Ein derartiges Zweilagen-Verbundblech ist im Fahrzeugkarosseriebau beispielsweise als Halbzeug für eine Fahrzeuginnenwand oder auch einen Träger geeignet. Es kann auch tiefziehbar sein, sofern die äußeren Flächen nicht durch die Fügestellen aufgewölbt sind.

Ein Vefahren zur Herstellung der Zweilagen-Verbundbleches wird im Anspruch 8 definiert. Anspruch 10 definiert ein Werkzeug Durchführung des Verfahrens.

Vorteilhafte Ausgestaltungen der Erfindung sind in den weiteren abhängigen Ansprüchen angegeben.

Technologisch besonders vorteilhaft ist es beispielsweise, die Aussparungen während des Fügeprozesses durch ein entsprechend ausgebildetes Werkzeug in einem Arbeitsgang einzubringen. Die form- oder stoffschlüssige Verbindung zwischen den freien Enden der Noppen des einen Gurtes mit dem jeweils an diesen aufliegenden anderen Gurt ist im Bereich neben der Aussparung angeordnet, so daß bei einer kreisförmigen Aussparung eine ringförmig um diese angeordnete Verbindungszone gegeben ist.

Die Verbindung der Noppen mit dem jeweiligen Gurt kann dabei durch eine formschlüssige Verhakung gegeben sein, die durch eine plastische Verformung der aneinanderliegenden Bleche bzw. Gurte in einem Durchsetzfügeprozeß erzeugt werden kann. Dieser Durchsetzfügeprozeß wird mit Hilfe eines im wesentlichen aus einer Preßform und einem mit dieser zusammenwirkenden Preßstempel gebildeten Werkzeuges in bekannter Weise durchgeführt, wobei die mechanische Verhakung der Bleche in den Eckbereichen der gebildeten topfförmigen Vertiefung neben dem Preßstempel erzeugt wird. Dieser weist in seinem Zentrum einen Stanzstempel auf, der nach dem Fügeprozeß das unter den Stempel verdrängte und zwischen der Verhakung befindliche und für die Verbindungsbildung nicht benötigte Material ausstanzt, wobei die Preßform so ausgebildet ist, daß eine entsprechende Vertiefung für den Stanzstempel freimachbar ist.

Die Verbindung der Noppen mit dem aufliegenden Gurt kann auch stoffschlüssig durch eine Verschweißung hergestellt sein, wobei die Fügestellen punkt- oder ringgeschweißt sein können, beispielsweise durch kreisförmiges Laserschweißen. Das innerhalb der ringförmigen Fügestelle befindliche und nicht zur Verbindungsbildung benötigte Material wird im gleichen Arbeitsgang durch ein entsprechend ausgebildetes Werkzeug entfernt.

Sind die Fügestellen derart im Bereich zwischen den Gurten im Zweilagen-Verbund angeordnet, daß sie die äußeren Flächen des Verbundes nicht überragen, ist das Zweilagen-Verbundblech bei entsprechender Blechqualität auch tiefziehbar.

Die Erfindung wird nachstehend an Ausführungsbeispielen erläutert. In der zugehörigen Zeichnung zeigen schematisch und im Schnitt:
- Fig.1a:: zwei aneinander angeordnete Bleche, die im Bereich des aus dem unteren Blech herauseprägten Noppens formschlüssig verbunden werden sollen,
- Fig.1b:: eine durch eine Durchsetzfügung erzeugte Verbindung im Bereich der Fügestelle,
- Fig.1c:: die Fügestelle mit mittig eingebrachter Aussparung,
- Fig.2a:: zwei aneinander angeordnete Bleche, die formschlüssig miteinander verbunden werden sollen,
- Fig.2b:: die durch eine Ringschweißung erzeugte Verbindung und
- Fig.3a-3c:: die Verfahrenschritte zur Erzeugung der Durchsetzfügestelle in Verbindung mit einem Werkzeug.

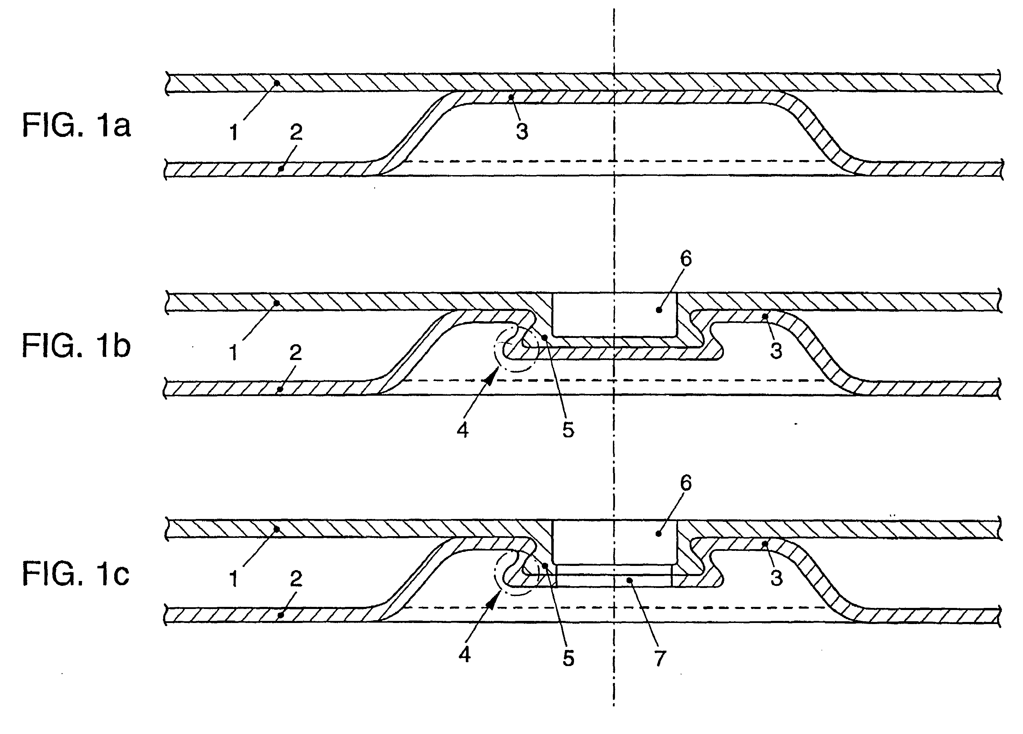

In Fig.1a sind zwei Blechausschnitte dargestellt, die durch eine formschlüssige Verbindung zu einem erfindungsgemäßen, aus einem Obergurt 1 und einem Untergurt 2 bestehenden Zweilagen-Verbundblech miteinander verbunden werden sollen. Das untere Blech - der spätere Untergurt 2 - weist in regelmäßigen Abständen angeordnete kreisrunde Noppen 3 auf, die aus dessen Oberflächenebene herausgeprägt und zum darüber angeordneten Blech - dem späteren Obergurt 1 - gerichtet sind. In der Figur ist einer dieser Noppen im Schnitt dargestellt. Die dem anliegenden Blech (1) zugewandte Noppenfläche ist eben und kreisrund.

Fig.1b zeigt die miteinander durch eine Durchsetzfügung formschlüssig verbundenen Gurte 1 und 2. Die Durchsetzfügung ist vom oberen Blech in Richtung auf den Noppen 3 des unteren Bleches erfolgt, wodurch die Fügestelle im Bereich zwischen den Gurten 1 und 2 im fertigen Zweilagen-Verbundblech angeordnet ist und die Oberfläche des Verbundes nach keiner Seite hin überragt. Die sich durch eine plastische Verformung der aufeinanderliegenden Materialschichten beim Durchsetzfügen ergebende mechanische Verhakung 4 ist im Bereich der rundumlaufenden unteren Kante 5 der gebildeten topfförmigen Vertiefung 6 neben dem Preßstempel (nicht dargestellt) erzeugt worden. Diese Verhakung 4 wirkt in allen Richtungen und stellt eine sehr sichere und zuverlässige mechanische Verbindung dar.

Fig.1c zeigt das erfindungsgemäße fertige Zweilagen-Verbundblech mit einer im Bereich der Fügestelle angeordneten und sowohl den Noppen 3 des unteren Gurtes 2 als auch den oberen Gurt 1 erfassenden kreisförmigen Aussparung 7. Der Bereich der Fügestelle, der die formschlüssige Verbindung zwischen den Blechen aufweist, befindet sich neben der Aussparung 7 und umschließt diese.

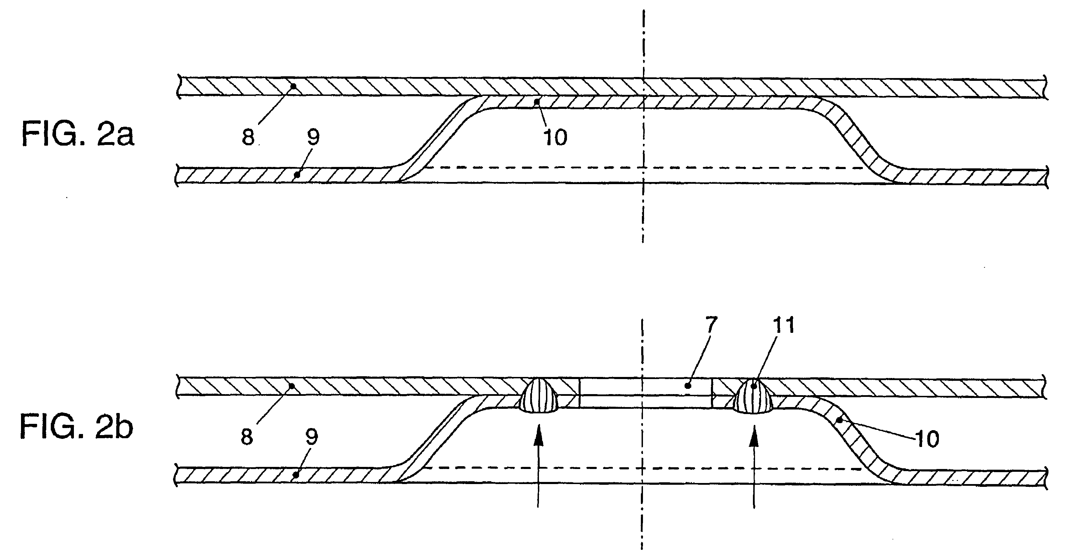

In der Fig. 2a und 2b ist ein Zweilagen-Verbundblech dargestellt, bei dem die beiden Bleche (8; 9) durch eine Laser-Ringschweißung im Bereich des Noppens 10 stoffschlüssig miteinander verbunden sind. Die Schweißung ist von der Seite des Untergurtes 9 des Verbundbleches erfolgt (Pfeilrichtung), derart, daß die Oberfläche des Obergurtes 8 nicht nach außen aufgewölbt ist. Innerhalb der gebildeten ringförmigen Schweißstelle 11 ist eine kreisrunde Aussparung 7 angeordnet.

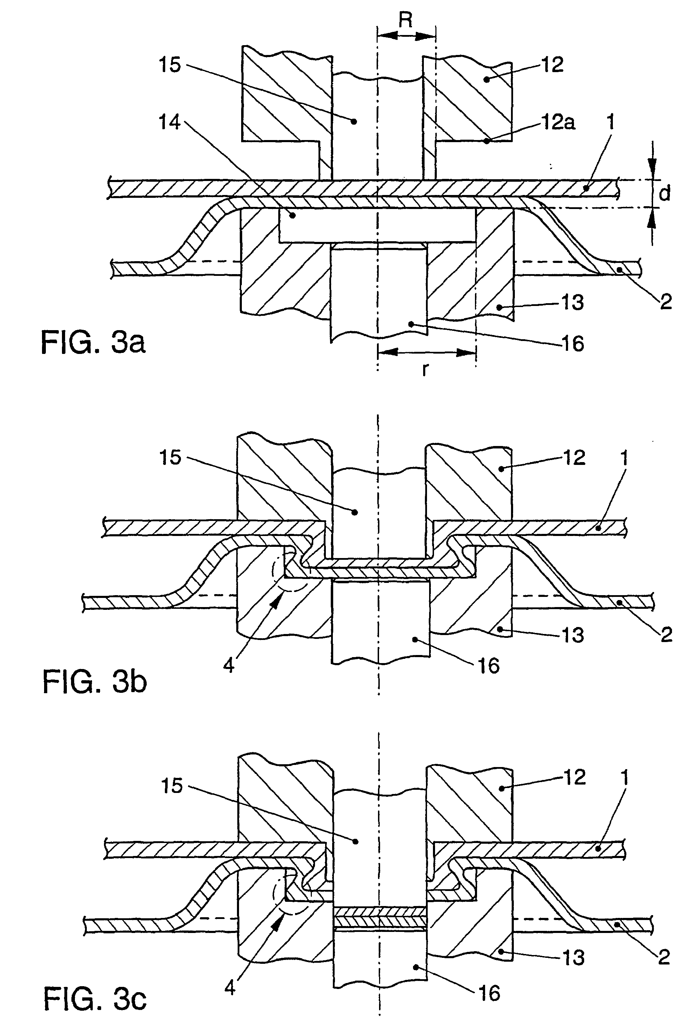

Die Fig.3a bis 3c zeigen die Herstellung eines Zweilagen-Verbundbleches nach Fig.1c in Verbindung mit einem Durchsetzfügewerkzeug. Die miteinander zu verbindenden Blechedie späteren Gurte 1 und 2 - werden zwischen einen Preßstempel 12 mit kreisförmigen Querschnitt und einer Preßform mit einer kreisförmigen Aufnahme 14 fest angeordnet. Der Radius r der Aufnahme 14 ist um mehr als die Wanddicke der beiden Bleche größer als der wirksame Radius R des Preßstempels 12. Dieser weist einen Stanzstempel 15 auf, der nach unten ausbringbar ist, und die Preßform 13 einen mit dem Stanzstempel 15 korrespondierenden Aufnahmeteil 16.

In einem nächsten Arbeitsschritt wird der Preßstempel 12 in Richtung auf die Preßform 13 gedrückt, wobei das unter diesem befindliche Material beider Bleche (1; 2) in die Aussparung 14 und dabei auch neben den vordringenden Stempel 12 unter plastischer Verformung verdrängt wird, wobei sich die in Fig. 3b gezeigte Verhakung 4 ausbildet. Dieser Arbeitsschritt ist beendet, wenn der Preßstempel 12 mit seinen Seitenbereichen 12a auf dem Blech (1) zur Anlage kommt. Dabei ist die topfförmige Vertiefung 6 gebildet worden (Fig.1b).

In einem weiteren Arbeitsschritt wird nun der Stanzstempel 15 des Preßstempels 12 zugleich mit dem Aufnahmeteil 16 betätigt, und die Aussparung 7 (Fig.1c) herausgestanzt. Damit ist ein gewichtsreduziertes, aus zwei Gurten 1 und 2 gebildetes Zweilagen-Verbundblech hergestellt.

## Patentansprüche

1. Zweilagen-Verbundblech aus einem Obergurt (1; 8) und einem Untergurt (2; 9), mit aus der Oberflächenebene wenigstens eines Gurtes (1, 2; 8, 9) herausgeprägten und jeweils zum anderen Gurt gerichteten Noppen (3; 10), wobei die beiden Gurte an freien Enden der Noppen (3; 10) mit Wandabschnitten aufeinander aufliegen und an diesen Wandabschnitten Fügestellen vorgesehen sind, an denen die jeweils zu dem anderen Gurt gerichteten Noppen (3; 10) an ihrem freien Ende mit dem aufliegenden Gurt form- oder stoffschlüssig verbunden sind, **dadurch gekennzeichnet, daß** in einem oder in beiden Gurten (1, 2; 8, 9) Aussparungen (7) vorgesehen sind, die in den aufeinander aufliegenden Wandabschnitten ausgebildet und neben den Fügestellen angeordnet sind.

2. Zweilagen-Verbundblech nach Anspruch 1, **dadurch gekennzeichnet, daß** die Aussparungen (7) in beiden Gurten (1, 2; 8, 9) ausgebildet sind.

3. Zweilagen-Verbundblech nach Anspruch 1 oder 2, **dadurch gekennzeichnet, daß** die Fügestellen zwischen den Gurten (1, 2; 8, 9) in dem Zweilagen-Verbundblech angeordnet sind und die Außenoberflächen des Zweilagen-Verbundbleches nicht überragen.

4. Zweilagen-Verbundblech nach Anspruch 2 oder 3, **dadurch gekennzeichnet, daß** die Noppen (3; 10) und der jeweils andere Gurt (1, 2; 8, 9) an den Fügestellen durch eine plastische Verformung neben der Aussparung (7) formschlüssig miteinander verhakt sind (4).

5. Zweilagen-Verbundblech nach Anspruch 2 oder 3, **dadurch gekennzeichnet, daß** die Noppen (3; 10) und der jeweils andere Gurt (1, 2; 8, 9) an den Fügestellen miteinander verschweißt sind.

6. Zweilagen-Verbundblech nach Anspruch 5, **dadurch gekennzeichnet, daß** die Fügestellen punktgeschweißt sind.

7. Zweilagen-Verbundblech nach Anspruch 5, **dadurch gekennzeichnet, daß** die Fügestellen ringgeschweißt sind.

8. Verfahren zur Herstellung eines Zweilagen-Verbundbleches, das entsprechend einem der Ansprüche 1 bis 7 ausgebildet ist, bei dem zunächst die Gurte (1, 2; 8, 9) stoff- oder formschlüssig miteinander verbunden und erst hernach die Aussparungen (7) hergestellt werden.

9. Verfahren nach Anspruch 8, **dadurch gekennzeichnet, daß** die Formung der Fügestellen und das Ausstanzen der Aussparungen (7) in einem gleichen Arbeitsgang vorgenommen wird, wobei das Ausstanzen einer Aussparung (7) an das plastische Formen einer Fügestelle anschließt.

10. Werkzeug zur Durchführung des Verfahrens nach Anspruch 9, umfassend einen Preßstempel (12) und eine Preßform (13) zur Formung einer topfförmigen Fügestelle an den aufliegenden Wandabschnitten einer Noppe, und einen Stanzstempel (15) sowie ein mit dem Stanzstempel (15) korrespondierendes Aufnahmeteil (16), die zum Ausstanzen einer Aussparung (7) gemeinsam betätigbar sind, wobei der Stanzstempel (15) mittig in dem Preßstempel angeordnet und aus diesem ausbringbar ist, und das Aufnahmeteil (16) auf der Seite der Preßform angeordnet ist.

## Claims

1. Two-layer composite metal sheet comprising an upper strap (1; 8) and a lower strap (2; 9), with projections (3; 10) which have been punched out of the surface plane of at least one strap (1, 2; 8, 9) and are directed towards in each case the other strap, the two straps bearing against one another by means of wall sections at free ends of the projections (3; 10) and joining locations being provided at these wall sections, at which joining locations the projections (3; 10) which are in each case directed towards the other strap are joined, at their free end, to the strap resting on top, in a positively locking manner or with a material-to-material bond, **characterized in that** cut-outs (7), which are formed in the wall sections which rest on top of one another and are arranged next to the joining locations, are provided in one or both straps (1, 2; 8, 9).

2. Two-layer composite metal sheet according to Claim 1, **characterized in that** the cut-outs (7) are formed in both straps (1, 2; 8, 9).

3. Two-layer composite metal sheet according to Claim 1 or 2, **characterized in that** the joining locations are arranged between the straps (1, 2; 8, 9) in the two-layer composite metal sheet and do not project beyond the outer surfaces of the two-layer composite metal sheet.

4. Two-layer composite metal sheet according to Claim 2 or 3, **characterized in that** the projections (3; 10) and the other strap (1, 2; 8, 9) are hooked (4) together in a positively locking manner at the joining locations by means of a plastic deformation next to the cut-out (7).

5. Two-layer composite metal sheet according to Claim 2 or 3, **characterized in that** the projections (3; 10) and the other strap (1, 2; 8, 9) are welded together at the joining locations.

6. Two-layer composite metal sheet according to Claim 5, **characterized in that** the joining locations are spot-welded.

7. Two-layer composite metal sheet according to Claim 5, **characterized in that** the joining locations are ring-welded.

8. Process for producing a two-layer composite metal sheet which is designed in accordance with one of Claims 1 to 7, in which first of all the straps (1, 2; 8, 9) are joined to one another by a material-to-material bond or in a positively locking manner, and only then are the cut-outs (7) produced.

9. Process according to Claim 8, **characterized in that** the shaping of the joining locations and the stamping-out of the cut-outs (7) are carried out in a single operation, the stamping-out of a cut-out (7) following the plastic shaping of a joining location.

10. Tool for carrying out the process according to Claim 9, comprising a press ram (12) and a press mould (13) for shaping a dish-like joining location on the bearing wall sections of a projection, and a stamping ram (15) and a receiving part (16) which corresponds to the stamping ram (15), which can be actuated together in order to stamp out a cut-out (7), the stamping ram (15) being arranged centrally in the press ram and it being possible to extend the stamping ram out of the press ram, and the receiving part (16) being arranged on the side of the press mould.

## Revendications

1. Tôle composite à deux couches composée d'un brin supérieur (1; 8) et d'un brin inférieur (2; 9), avec des bosses (3; 10) enfoncées hors du plan de la surface d'au moins un brin (1, 2; 8, 9) et chaque fois dirigées vers l'autre brin, dans laquelle les deux brins sont appliqués l'un sur l'autre par des portions de paroi aux extrémités libres des bosses (3; 10) et il est prévu sur ces portions de paroi des points de jonction auxquels les bosses (3; 10) chaque fois dirigées vers l'autre brin sont assemblées, géométriquement ou matériellement, par leur extrémité libre au brin appliqué, **caractérisée en ce qu'**il est prévu dans un ou dans les deux brins (1, 2; 8, 9) des évidements (7), qui sont formés dans les portions de paroi appliquées l'une sur l'autre et qui sont disposés à côté des points de jonction.

2. Tôle composite à deux couches suivant la revendication 1, **caractérisée en ce que** les évidements (7) sont formés dans les deux brins (1, 2; 8, 9).

3. Tôle composite à deux couches suivant la revendication 1 ou 2, **caractérisée en ce que** les points de jonction sont disposés entre les brins (1, 2; 8, 9) dans la tôle composite à deux couches et ne dépassent pas les surfaces extérieures de la tôle composite à deux couches.

4. Tôle composite à deux couches suivant la revendication 2 ou 3, **caractérisée en ce que** les bosses (3; 10) et l'autre brin respectif (1, 2; 8, 9) sont emboîtés (4) géométriquement l'un dans l'autre aux points de jonction par une déformation plastique à côté de l'évidement (7).

5. Tôle composite à deux couches suivant la revendication 2 ou 3, **caractérisée en ce que** les bosses (3; 10) et l'autre brin respectif (1, 2; 8, 9) sont soudés l'un à l'autre aux points de jonction.

6. Tôle composite à deux couches suivant la revendication 5, **caractérisée en ce que** les points de jonction sont soudés par points.

7. Tôle composite à deux couches suivant la revendication 5, **caractérisée en ce que** les points de jonction sont soudés en anneau.

8. Procédé pour la fabrication d'une tôle composite à deux couches, qui est façonnée conformément à l'une quelconque des revendications 1 à 7, dans lequel on assemble d'abord les brins (1, 2; 8, 9) l'un à l'autre matériellement ou géométriquement, et on exécute seulement ensuite les évidements (7).

9. Procédé suivant la revendication 8, **caractérisé en ce que** l'on exécute en une même opération le formage des points de jonction et l'estampage des évidements (7), l'estampage d'un évidement (7) suivant immédiatement le formage plastique d'un point de jonction.

10. Outillage pour la mise en oeuvre du procédé suivant la revendication 9, comprenant un poinçon de presse (12) et une matrice de presse (13) pour le formage d'un point de jonction en forme de cuvette sur les portions de paroi appliquées d'une bosse, et un poinçon d'estampage (15) ainsi qu'une pièce de réception (16) correspondant au poinçon d'estampage (15), qui peuvent être actionnées ensemble pour l'estampage d'un évidement (7), le poinçon d'estampage (15) étant disposé au milieu du poinçon de presse et pouvant être extrait de celui-ci, et la pièce de réception (16) étant disposée sur le côté de la matrice de presse.
